# EUROPÄISCHE PATENTSCHRIFT

(11) **EP 1 149 372 B1**
(45) Veröffentlichungstag und Bekanntmachung des Hinweises auf die Patenterteilung: **11.09.2002**
(21) Anmeldenummer: 00904845.5
(22) Anmeldetag: 19.01.2000
(51) Int. Cl.: G08G 1/0967, G01S 13/86, G01S 13/93

(54) **VORRICHTUNG ZUR ABSTANDSERMITTLUNG UND DATENÜBERTRAGUNG IN EINEM KRAFTFAHRZEUG**
DEVICE FOR DETERMINING DISTANCE AND FOR TRANSMITTING DATA IN A MOTOR VEHICLE
DISPOSITIF POUR LA DETERMINATION D'UNE DISTANCE ET LA TRANSMISSION DE DONNEES DANS UN VEHICULE AUTOMOBILE

(30) Priorität: 21.01.1999 DE 19902185
(43) Veröffentlichungstag der Anmeldung: 31.10.2001
(73) Patentinhaber: ROBERT BOSCH GMBH, 70442 Stuttgart (DE)
(72) Erfinder: VOIGTLAENDER, Klaus, D-73117 Wangen (DE); KRAMP, Wolfgang, D-71254 Ditzingen (DE); GAIER, Stefan, D-70599 Stuttgart (DE); GIEHLER, Elmar, D-71706 Markgroeningen (DE); HASCH, Jürgen, D-73066 Uhlingen (DE); SCHMITZ, Stephan, D-70197 Stuttgart (DE); GROESCH, Lothar, D-70374 Stuttgart (DE)
(86) Internationale Anmeldenummer: DE0000161
(87) Internationale Veröffentlichungsnummer: WO00043970

(56) Entgegenhaltungen:
- WO-A-97/08565
- DE-A- 4 442 189
- DE-A- 19 732 044
- US-A- 5 594 447

## Beschreibung

Die Erfindung geht aus von einer Vorrichtung zur Abstandsermittlung und Datenübertragung in einem Kraftfahrzeug nach der Gattung des unabhängigen Anspruchs. Aus der DE 44 42 189 A1 ist bereits ein System zur Abstandsmessung und selektiven Informationsübertragung für Kfz-Anwendungen bekannt. Die für die Abstandsmessung vorhandenen Sende- und Empfangseinheiten werden zugleich zum Senden und Empfangen von Informationen verwendet und/oder es werden die für die Entfernungsmessung verwendeten Signale direkt zur Informationsübermittlung genutzt. Unter Zuhilfenahme der Abstandsmessung können passive Schutzmaßnahmen für Fahrzeuge bei Front-, Seiten- oder Heckaufprall aktiviert werden. Der Informationsaustausch dient der Beurteilung von Verkehrssituationen oder zur Erfassung, Identifizierung und Kostenzuordnung bei einer Straßenbenutzungsgebühr.

Aus der WO-A-97/08565 ist ein Nachrichtenübertragungssystem bekannt, das für Kraftfahrzeuge Warnsignale erzeugt zusammen mit konventionellen Radardetektoren. Das übertragene Radarsignal wird frequenz- oder phasenmoduliert im Sinne einer digitalen Codierung. Somit kann über dieses Radarsignal mit dem Fahrer des Kraftfahrzeugs kommuniziert werden.

Der Erfindung liegt die Aufgabe zugrunde, den für die Abstandsmessung vorhandenen Übertragungskanal in einfacher Weise für weitere Kraftfahrzeugfunktionen zu erschließen, die nur in Verbindung mit einem als gültig erachteten Datenaustausch aktiviert werden. Diese Aufgabe wird durch die im unabhängigen Anspruch aufgeführten Merkmale gelöst.

### Vorteile der Erfindung

Die Vorrichtung zur Abstandsermittlung und Datenübertragung, anwendbar in einem Kraftfahrzeug, weist Sendemittel zum Erzeugen und Abstrahlen eines Radarsignals auf. Sie ist mit Empfangsmitteln zur Aufnahme eines Radarsignals zur Detektion der Entfernung und/oder der Geschwindigkeit eines weiteren Objekts ausgestattet. Die erfindungsgemäße Vorrichtung zeichnet sich dadurch aus, daß Umschaltmittel vorgesehen sind, die den Betrieb der Sende- und/oder Empfangsmittel entweder in einer Radarbetriebsart zur Abstands- bzw. Geschwindigkeitserfassung zumindest eines weiteren Objekts oder in einer Datenaustauschbetriebsart zum Datenaustausch mit einem Sender/Empfänger bewirken, wobei in Abhängigkeit von dem Datenaustausch eine Freigabe der Fahrberechtigung und/oder der Zugangsberechtigung des Kraftfahrzeugs erfolgt. Bei diesen Kraftfahrzeugfunktionen kann es sich um eine Schließanlage oder die Aufhebung einer Wegfahrsperre handeln. Die für die Abstands- oder Geschwindigkeitsermittlung ohnehin vorhandenen Sende- und Empfangsmittel werden erfindungsgemäß auch zum Zwecke des Datenaustausches mit einem gegebenenfalls tragbar ausgeführten Sender/Empfänger verwendet. Der Datenaustausch mit dem Sender/Empfänger wird auf eine Berechtigung hin ausgewertet. Erhalten die Empfangsmittel ein als gültig erkanntes Datensignal von dem Sender/Empfänger, wird beispielsweise die Schließanlage im Sinne eines Öffnens angesteuert. Läuft der'Datenaustausch innerhalb des Kraftfahrzeugs ab, so kann er dazu herangezogen werden, die Fahrberechtigung des Benutzers anhand des mitgeführten Senders/Empfängers abzufragen. Erst bei einem als berechtigt erkannten Signal des Senders/Empfängers wird die Startfreigabe erteilt. Durch die Integration der zusätzlichen Funktion des Datenaustauschs zum Zwecke der Zugangsberechtigung und Startberechtigung können vorhandene Komponenten, die bereits zur Realisierung anderer Funktionen vorgesehen sind, ebenfalls genutzt werden. Anhand der Umschaltmittel lassen sich die unterschiedlichen Betriebsarten der Sende- und Empfangsmittel gezielt je nach Betriebssituation auswählen. In der Radarbetriebsart werden die Entfernung und/oder die Geschwindigkeit des Fahrzeugs zu einem benachbarten Objekt ermittelt. Diese Daten können zu einer Auslösung eines Airbags, zur Ansteuerung einer Warneinrichtung in Verbindung mit einer Einparkhilfe, einer Erkennung von Objekten im sog. toten Winkel, einer Stop-and-Go-Erfassung herangezogen werden. Eine Abstrahlung des Radarsignals in den Innenraum des Kraftfahrzeugs kann zum Zweck einer Innenraumüberwachung in Verbindung mit einer Diebstahlwarnanlage oder einer Sitzbelegungserkennung ausgewertet werden.

In einer zweckmäßigen Ausgestaltung ist die Datenaustauschbetriebsart dann aktiviert, wenn das Kraftfahrzeug ausgeschaltet wurde und/oder der Benutzer das Kraftfahrzeug verlassen hat. Die Sende- und Empfangsmittel sind nun so angesteuert, daß sie ein Datensignal senden und/oder empfangen und auswerten können. Zur Entriegelung der Schließanlage wird nämlich ein entsprechendes Datensignal von dem Sender/Empfänger erwartet.

In einer weiteren Ausgestaltung wird die Datenaustauschbetriebsart dann aktiviert, wenn ein Schaltmittel betätigt wurde, beispielsweise in Verbindung mit der Einleitung eines Öffnungs- und/oder Startvorgangs des Kraftfahrzeugs. Beispielsweise bei Betätigen des Startschalters wird auf die Datenaustauschbetriebsart umgeschaltet. Um die Startfreigabe des Kraftfahrzeugs zu erteilen, muß ein als gültig erkannter Datenaustausch zwischen dem Sende- und Empfangsmittel und dem Sender/Empfänger durchlaufen worden sein. Soll der Datenaustausch zum Zwecke eines Öffnens des Kraftfahrzeugs ausgewertet werden, muß der Benutzer beispielsweise den Türgriff des Kraftfahrzeugs betätigen. Das in diesem Zusammenhang erkannte Schaltsignal veranlaßt eine Umschaltung in die Datenaustauschbetriebsart, so daß nun ein Datenaustausch mit dem Sender/Empfänger erfolgen kann. Wird dieser erfolgreich durchlaufen, wird die Schließanlage im Sinne eines Öffnens angesteuert.

In einer zweckmäßigen Ausgestaltung werden die Umschaltmittel in der Weise angesteuert, daß sie der Informationscodierung dienen. Damit ist eine Doppelfunktion gewährleistet. Zum einen läßt sich damit die Umschaltung realisieren, andererseits dient das Umschaltmittel in der Betriebsart Datenaustausch als Modulationsmittel.

Weitere zweckmäßige Weiterbildungen ergeben sich aus weiteren abhängigen Ansprüchen und aus der Beschreibung.

### Zeichnung

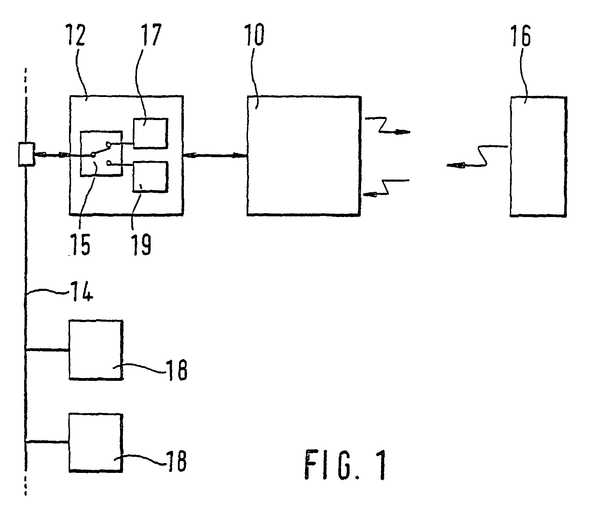

Ein Ausführungsbeispiel der Erfindung ist in der Zeichnung dargestellt und wird im folgenden näher beschrieben. Es zeigen Figur 1 ein Blockschaltbild, die Figuren 2 und 3 eine mögliche Anordnung und Vernetzung im Kraftfahrzeug, sowie die Figuren 4 und 5 schematische schaltungstechnische Realisierungen der erfindungsgemäßen Vorrichtung.

### Beschreibung von Ausführungsbeispielen

Eine Sende-/Empfangseinrichtung 10 gibt ein Radarsignal ab und empfängt ein Radarsignal. Die Sende-/Empfangseinrichtung 10 ist in der Lage, ein Datensignal mit einem Sender/Empfänger 16 auszutauschen. Die Sende-/Empfangseinrichtung 10 tauscht Signale aus mit einem Steuergerät 12. Schematisch angedeutet sind in dem Steuergerät 12 eine Radarbetriebsart 17 und eine Datenaustauschbetriebsart 19 realisiert. Über ein Umschaltmittel 15 läßt sich entweder die Radarbetriebsart 17 oder die Datenaustauschbetriebsart 19 aktivieren. Das Steuergerät 12 tauscht über ein Bussystem 14 Daten aus mit weiteren Funktionssteuergeräten 18.

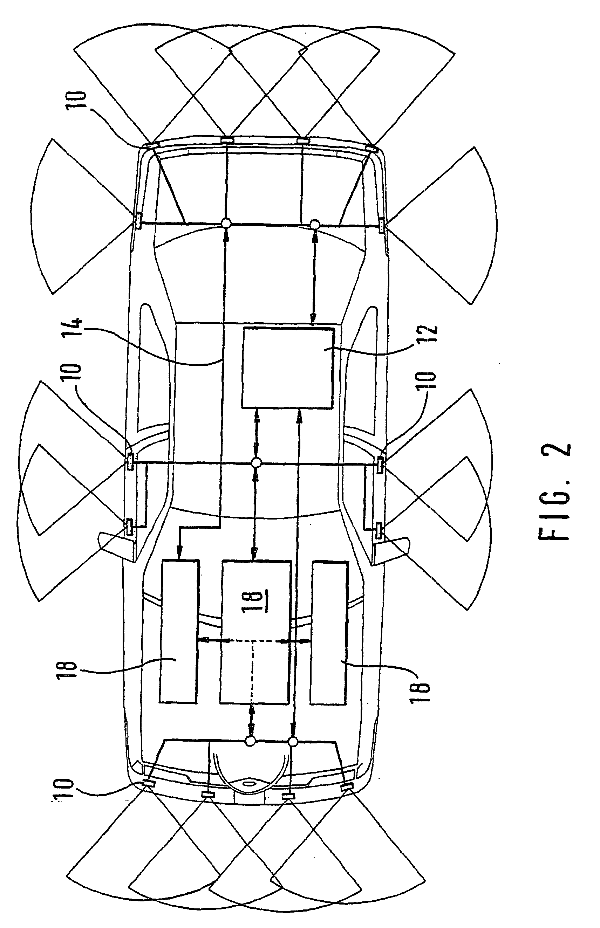

Gemäß dem Ausführungsbeispiel nach Figur 2 sind rings um das Kraftfahrzeug Sende-/Empfangseinrichtungen 10 angeordnet, die den Außenraum des Kraftfahrzeugs erfassen. Die vorzugsweise an der Front- und Heckpartie sowie im Seitentürbereich angeordneten Sende-/Empfangseinrichtungen 10 sind über das Bussystem 14 vernetzt und mit dem Steuergerät 12 und dem Funktionssteuergerät 18 verbunden.

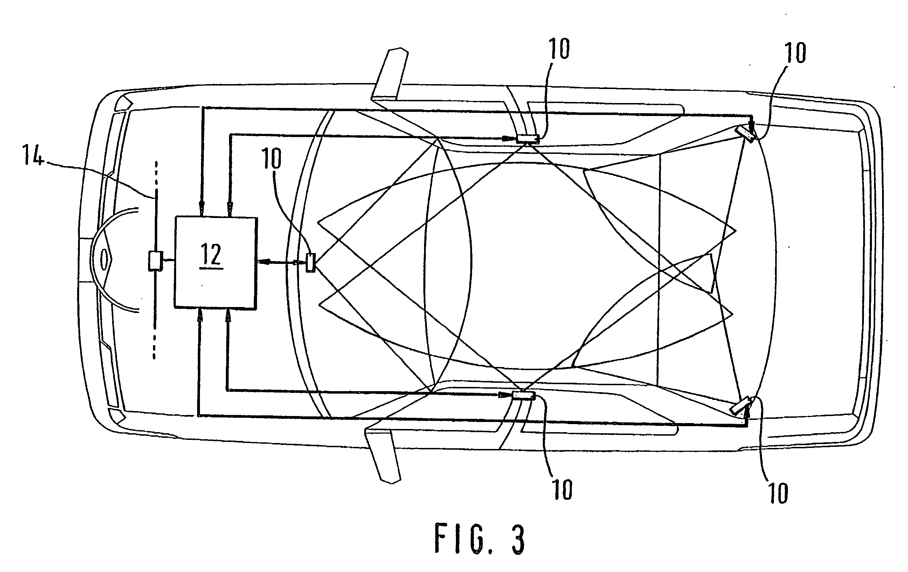

Bei dem Ausführungsbeispiel gemäß Figur 3 ist mindestens eine sende-/Empfangseinrichtung 10 im Innenraum, beispielsweise am Türinnenholm angeordnet und so ausgerichtet, daß Signale in den Innenraum abgestrahlt und vom Innenraum empfangen werden können. Die Sende-/Empfangseinrichtungen 10 tauschen Signale mit dem Steuergerät 12 aus, das über das Bussystem 14 gegebenenfalls mit weiteren Funktionssteuergeräten 18 gekoppelt ist.

Ein Taktgenerator 24 gibt sein Ausgangssignal an einen ersten Pulsgenerator 26 und an eine Zeitverzögerung 28 ab. Das Ausgangssignal der Zeitverzögerung 28 wird einem zweiten Pulsgenerator 27 zugeführt. Das Ausgangssignal des ersten Pulsgenerators 26 ist die Eingangsgröße eines ersten Umschaltmittels 21, das in Abhängigkeit von einem Ausgangssignal des Steuergeräts 12 angesteuert wird. Das Ausgangssignal des ersten Schaltmittels 21 dient einem ersten Schaltmittel 31 als Steuergröße. Ein gegebenenfalls ebenfalls von dem Steuergerät 12 beeinflußter Oszillator 34 gibt sein Ausgangssignal über einen Leistungsteiler 36 und das erste Schaltmittel 31 an eine Sendeantenne 40 ab. Das Ausgangssignal der einstellbaren Zeitverzögerung 28 dient einem zweiten Pulsgenerator 27 als Eingangsgröße, dessen Ausgangssignal einem zweiten Umschaltmittel 22 zugeführt wird, das ebenfalls von dem Steuergerät 12 angesteuert wird. Das Ausgangssignal des zweiten Umschaltmittels 22 dient als Steuergröße für ein zweites Schaltmittel 32. Über das zweite Schaltmittel 32 wird das zweite Ausgangssignal des Leistungsteilers 36 einem Mischer 38 zugeführt. Die zweite Eingangsgröße des Mischers bildet ein von einer Empfangsantenne 42 empfangenes Signal. Der Mischer 38 gibt ein Ausgangssignal 44 ab.

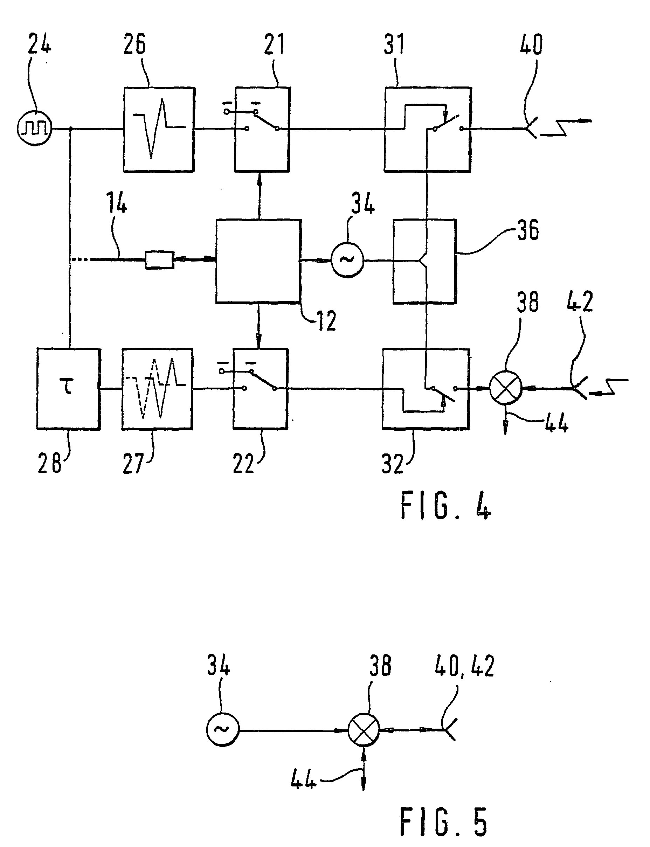

Das Ausführungsbeispiel gemäß Figur 5 ist eine gegenüber Figur 4 stark vereinfachte Ausführungsform. Das Ausgangssignal des Oszillators 34 ist dem Mischer 38 direkt zugeführt. Der zweite Ein- bzw. Ausgang des Mischers 38 ist mit der Sendeantenne 40 bzw. Empfangsantenne 42 verbunden. Je nach Ansteuerung wird dem Mischer 38 ein weiteres Eingangssignal zugeführt oder als Mischerausgangssignal abgegriffen.

In dem Steuergerät 12 sind die Radarbetriebsart 17 und die Datenaustauschbetriebsart 19 hinterlegt. Die Radarbetriebsart 17 dient der Abstands- bzw. Geschwindigkeitsermittlung des Kraftfahrzeugs bezogen auf weitere Objekte. Hierzu wird ein kurzer Radarimpuls ausgesendet und die anschließend wieder eingehende Reflexionswelle hinsichtlich der Laufzeitdifferenz ausgewertet. Anhand der Laufzeitdifferenz läßt sich die Entfernung zu Objekten und deren Relativgeschwindigkeit bestimmen. Werden mehrere Messungen durchgeführt, wird die Geschwindigkeit über Differentiation der Entfernung bestimmt. Bei nur einer Messung kann die Geschwindigkeit anhand des Doppler-Effekts abgeleitet werden.

Die Umschaltmittel 15 nehmen eine Auswahl vor zwischen der Radarbetriebsart 17 und der Datenaustauschbetriebsart 19. In der Datenaustauschbetriebsart ist die Sende-/Empfangseinrichtung 10 in der Lage, durch eine entsprechende Codierung, Frequenz- oder Phasenmodulation Datensignale auszusenden und Datensignale zu empfangen. Es werden Daten mit dem Sender/Empfänger 16 ausgetauscht. Im Rahmen einer Berechtigungsabfrage wird das vom Sender/Empfänger 16 gesendete Datensignal empfangen und dahingehend ausgewertet, ob es mit einem als zulässig erachteten Referenzsignal übereinstimmt. In Abhängigkeit von dieser Zulässigkeitsüberprüfung des in der Datenaustauschbetriebsart 19 empfangenen Signals werden Kraftfahrzeugfunktionen aktiviert bzw. freigegeben. Ein als zulässig erkanntes Signal bewirkt ein Öffnen oder Verschließen der Schließanlage. Im Rahmen einer Fahrberechtigungsabfrage wird diese nur erteilt, wenn ein anhand des Datenaustauschs als zulässig erkannter Sender/Empfänger 16 im Innenraum des Kraftfahrzeugs vorhanden war. In der Datenaustauschbetriebsart 19 kann dem Sender/Empfänger 16 auch die zur Ausführung des Sendevorgangs notwendige Energie bereitgestellt werden, so daß der Sender/Empfänger 16 keine eigene Energieversorgung aufweisen muß.

Bei dem Ausführungsbeispiel gemäß Figur 2 sind die Send-/Empfangseinrichtungen 10 so angeordnet, daß sie den Außenraum des Kraftfahrzeugs erfassen. In der Radarbetriebsart 17 werden die reflektierten Radarsignale bei kleinen Geschwindigkeiten - beispielsweise kleiner als 30 km/h - für eine Einparkhilfe ausgewertet. Bei einem Unterschreiten eines bestimmten Abstands zu einem benachbarten Objekt wird ein Warnsignal erzeugt, das dem Benutzer eine Kollisionsgefahr signalisiert. In dieser Betriebsart wird der Abstand erfaßt. Ebenfalls kann die Radarbetriebsart 17 im sogenannten Stopand-Go-Betrieb dazu verwendet werden, dem Fahrer bei einem Stau das Anhalten oder Weiterfahren des Vordermanns zu signalisieren oder dieses automatisch zu veranlassen. Als weiterer Anwendungsfall kann die Airbagauslösung bei stehendem Fahrzeug zum Schutz gegenüber auffahrenden Fahrzeugen mit hilfe der Radarbetriebsart 17 vorgenommen werden.

Bei höheren Geschwindigkeiten - beispielsweise größer als 30 km/h - wird das reflektierte Radarsignal zur Unfallfrüherkennung ausgewertet. Wird ein bevorstehender Unfall anhand dieser Signale erkannt, kann beispielsweise eine Airbag-Auslösung eingeleitet werden.

Die Umschaltung von der Radarbetriebsart 17 in die Datenaustauschbetriebsart 19 erfolgt vorzugsweise, wenn das Fahrzeug steht, um ein verschlossenes Fahrzeug mit Hilfe des Senders/Empfängers 16 zu entriegeln. Die Betriebsartenumschaltung kann durch verschiedene Ereignisse ausgelöst werden. Zum einen kann die Sende-/Empfangseinrichtung 10 periodisch auf Empfangsbetrieb geschaltet werden. Alternativ wird durch Ziehen am Türgriff mit der Betätigung des entsprechenden Schaltkontakts die Datenaustauschbetriebsart 19 aktiviert.

Die Sende-/Empfangseinrichtung 10 tauscht Daten mit dem Sender/Empfänger 16 in Form von informationscodierten, beispielsweise im Gigahertzbereich liegenden, Signalen aus. Die Sende-/Empfangseinrichtung 10 sendet eine Information an den Sender/Empfänger 16, die dieser weiterverarbeitet an die Sende/Empfangseinrichtung 10 zurücksendet. Im Steuergerät 12 wird die eingehende Antwort des Senders/Empfängers 16 auf Zulässigkeit überprüft. Stimmt das empfangene Signal mit dem erwarteten überein, so wird ein als Schließanlagenansteuerung ausgebildetes Funktionssteuergerät 18 in Verbindung mit dem Bussystem 14 im Sinne eines Entriegelns der Schließanlage angesteuert.

In der Datenaustauschbetriebsart 19 ist es jedoch nicht erforderlich, daß die Sende-/Empfangseinrichtung 10 selbst Daten sendet. Es könnte ausreichend sein, lediglich die nach Betätigung eines Schaltmittels am Sender/Empfänger 16 abgestrahlten Daten zu empfangen. Die Manipulationssicherheit erhöht sich jedoch, wenn der Datenaustausch bidirektional erfolgt. Bei dieser Ausgestaltung kann als weiteres Zulässigkeitskriterium eine Laufzeitermittlung vorgesehen werden. Wird das von der Sende-/Empfangseinrichtung 10 gesendete Signal lediglich von einem Sender/Empfänger 16 zurückgesendet, verzögert sich diese Rückantwort durch Filtereinschwingzeiten, Zeiten für Umschaltvorgänge und die Übertragungszeit des Signals durch den Raum. Würde noch ein weiterer Sender/Empfänger 16 unberechtigterweise an dem Datenaustausch beteiligt sein, so impliziert die Verwendung eines weiteren Senders/Empfängers 16 eine weitere Zeitverzögerung des Antwortsignals. Anhand einer Laufzeitermittlung wird lediglich eine Antwortverzögerung zugelassen, die bei der Verwendung eines einzigen Senders/Empfängers 16 innerhalb einer als gültig betrachteten Entfernung entsteht. Überschreitet die Antwortsignalverzögerung eine bestimmte Zeitschwelle, leitet ein danach eingehendes - eventuell berechtigtes - Antwortsignal keinen Öffnungsvorgang ein. Da bereits in der Radarbetriebsart 17 Mittel zur Laufzeitbestimmung vorgesehen sind, kann auch bei der Datenaustauschbetriebsart 19 hierauf zurückgegriffen werden, um die Laufzeitermittlung durchzuführen. Zudem kann das in der Datenaustauschbetriebsart 19 ausgesendete Signal zur Energieversorgung des Senders/Empfängers 16 verwendet werden, so daß kurzfristig Energie für den sich anschließenden Sendevorgang des Senders/Empfängers 16 zwischengespeichert wird.

Vorzugsweise kann die Sende-/Empfangseinrichtung 10 wechselweise in der Radarbetriebsart 17 und in der Datenaustauschbetriebsart 19 angesteuert werden, um eine Öffnungsanforderung zu plausibilisieren. In der Radarbetriebsart 17 wird ermittelt, ob sich ein Objekt dem Fahrzeug nähert. Nur bei einer Annäherung wird der Öffnungsvorgang tatsächlich eingeleitet. Dadurch lassen sich Manipulationsmöglichkeiten weiter einschränken.

Bei dem Ausführungsbeispiel gemäß Figur 3 sind die Sende-/Empfangseinrichtungen 10 so angeordnet, daß sie Signale in den Fahrzeuginnenraum abgeben und Signale aus dem Fahrzeuginnenraum empfangen. Auch für diesen Anwendungsfall sind wiederum die zwei Betriebsarten Radarbetrieb und Datenaustausch vorgesehen. Bei abgestelltem und verschlossenem Fahrzeug werden die Sende-/Empfangseinrichtungen 10 periodisch im Radarbetrieb zur Innenraumüberwachung angesteuert. Wird anhand der reflektierten Radarsignale eine Person im Innenraum erkannt, wird die Alarmanlage angesteuert. Im Fahrbetrieb hingegen ermittelt die Anordnung in der Radarbetriebsart 17, welche Fahrzeugsitze besetzt sind, um gegebenenfalls einen Airbag nur für die besetzten Sitzplätze auszulösen. Eine Auslösung wird unterbunden, wenn die Radarsignale auf einen Kindersitz schließen lassen. Die Umschaltung von Radarbetrieb 17 auf Datenaustauschbetrieb 19 erfolgt dann, wenn der Benutzer das Fahrzeug betritt. Hierzu können beispielsweise die entsprechenden Öffnungs- und Schließsignale der Tür oder ein Ziehen am Türgriff ausgewertet werden. Auch die Betätigung des Startschalters zur Inbetriebnahme des Kraftfahrzeugs könnte den Wechsel in die Datenaustauschbetriebsart 19 bewirken. In der Datenaustauschbetriebsart 19 läuft in ähnlicher Weise, wie bereits für das Ausführungsbeispiel gemäß Figur 2 beschrieben, ein Datenaustausch zwischen Sende-/Empfangseinrichtung 10 und Sender/Empfänger 16 ab. Wird ein vom Sender/Empfänger 16 ausgesendetes Signal als zulässig erkannt, erzeugt das Steuergerät 12 ein entsprechendes Freigabesignal, das über das Bussystem 14 an die betriebsrelevanten Steuergeräte 18 weitergeleitet wird. Hierauf kann das Kraftfahrzeug gestartet werden, da die Funktionssteuergeräte 18 nun betriebsbereit geschaltet sind.

Der Taktgenerator 24 erzeugt ein Pulssignal bei einer Frequenz von 1 bis 50 MHz. Diese Triggerimpulse wandeln erster und zweiter Pulsgenerator 26, 27 in kurze Pulse einer Dauer kleiner als 1 Nanosekunde mit Hilfe von sogenannten Step-Recovery-Dioden oder Schalttransistoren um. Der Erzeugung eines Referenzsignals dient die einstellbare Zeitverzögerung 28, der ebenfalls ein zweiter Pulsgenerator 27 nachgeschaltet ist. Der entstehende Impuls wird gegenüber dem Ausgangssignal des ersten Pulsgenerators 26 entsprechend zeitverzögert. In der Radarbetriebsart 17 werden erstes und zweites Schaltmittel 21, 22 von dem Steuergerät 12 im Sinne eines Schließens angesteuert. Dadurch wird der Puls direkt an den Steuereingang des ersten und zweiten Schaltmittels 31, 32 weitergeleitet. Mit Auftreten des Pulses werden erstes und zweites Schaltmittel 31, 32 für diese Pulsdauer geschlossen. Für diese Zeitspanne gelangt das getastete Ausgangssignal des Oszillators 34, beispielsweise ein Oszillator im Bereich 2,45GHz, 5,8GHz, 24GHz oder 77GHz über den Leistungsteiler 36 an die Sendeantenne 40. Der Radarimpuls ist so kurz, daß nur wenige Wellenzüge des Oszillators 34 gesendet werden. Diese Wellenzüge gelangen zeitverzögert auch an den lokalen Oszillatoreingang des Mischers 38. Dieses Signal wird mit dem von der Empfangsantenne 42 empfangenen Signal korreliert. Das Ausgangssignal des Mischers 38 wird in einer nicht dargestellten Signalauswertung hinsichtlich Entfernung und Relativbewegung ausgewertet.

In der Datenaustauschbetriebsart 19 werden erstes und zweites Umschaltmittel 21, 22 entsprechend der zu übertragenden oder zu empfangenden Information angesteuert. Die Information wird binär codiert, indem das erste Umschaltmittel 21 je nach Bitfolge des zu sendenden Codes geöffnet und geschlossen wird. Die beiden Umschaltmittel 21, 22 legen im geöffneten Zustand ein Ausgangspotential (Schaltsignal) an den jeweiligen Steuereingang der Schaltmittel 31, 32, so daß diese im Sinne eines Schließens angesteuert werden. In Übereinstimmung mit dieser binären Codierung leitet das erste Schaltmittel 31 das Ausgangssignal des Oszillators 34 an die Sendeantenne 40 weiter. In der Datenaustauschbetriebsart 19 bleibt das zweite Umschaltmittel 22 geöffnet, wodurch das zweite Schaltmittel 32 im Sinne eines Schließens angesteuert ist. An dem Mischer 38 liegt ständig das Oszillatorsignal an. Das ebenfalls entsprechend binär codierte, von der Empfangsantenne 42 erfaßte Eingangssignal wird mit dem Oszillatorsignal gemischt. Das Ausgangssignal des Mischers 38 wird durch eine nicht dargestellten Signalerfassung decodiert und durch Vergleich mit einem Referenzsignal zum Zweck der Berechtigungsüberprüfung ausgewertet.

Das zweite Umschaltmittel 22 wird von dem Steuergerät 12 in der Datenaustauschbetriebsart 19 im Sinne eines Öffnens angesteuert, so daß über das dann geschlossene zweite Schaltmittel 32 das Oszillatorausgangssignal am Mischereingang liegt. Diese Mischeransteuerung ist für die Radarimpulsauswertung nicht geeignet. Zumindest das zweite Umschaltmittel 22 wird in Abhängigkeit von einem Schaltsignal eines Bedienelements oder Überwachungssensors beeinflußt. Beispielsweise mit Ziehen des Türgriffs, Betätigen des Startschalters oder nach erkanntem Öffnen oder Schließen der Tür wird das zweite Umschaltmittel 22 geöffnet, da nun in der Datenaustauschbetriebsart 19 mit einer Berechtigungsabfrage mit entsprechendem Empfangsvorgang einer codierten Information des Senders/Empfängers 16 gerechnet wird.

In einer alternativen Ausgestaltung kann die Datenübertragung auch mit Hilfe einer Frequenz- oder Phasenmodulation erfolgen. Das Steuergerät 12 bewirkt informationsabhängig eine Frequenz- oder Phasenmodulation des Oszillators 34.

Ein gegenüber Figur 4 vereinfachtes Konzept ist dargestellt, wenn nur die Datenaustauschbetriebsart 19 notwendig ist. Wie bereits oben beschrieben, dient das System als Empfänger. Legt man jedoch an den Port 44 des Mischers 38 eine Basisbandmodulation an, so kann dieses System auch als Sender verwendet werden. In Ergänzung zu dem System gemäß Figur 4 kann auch dort die Datenübertragung durch Basisbandmodulation an Port 44 durchgeführt werden.

Werden die Sende-/Empfangseinrichtungen 10 beispielsweise in den Türrahmen eingebaut, so kann durch geeignete Umschaltung der Antennen 40, 42 die Abstrahlrichtung von Innenraum auf Außenraum geändert werden. Dies könnte durch sogenannte Phasenleitungen, Umschalten der Antennenelemente oder durch Strahlformung mit zwei Hauptkeulen erreicht werden. Eine gemeinsame Sende/Empfangsantenne 40/42 ist grundsätzlich möglich.

In der Datenaustauschbetriebsart 19 lassen sich weitere Anwendungsmöglichkeiten der vorstehend beschriebenen Schaltungsanordnung realisieren. Hierzu ist der Sender/Empfänger 16 stationär angeordnet, um in Abhängigkeit von einem als zulässig erkannten Signal eine Einrichtung anzusteuern, die die Zufahrt zu einem Parkplatz, Parkhaus, Garage, Campingplatz, Autofähren oder -züge o.ä. freigibt. Der Benutzer muß ein entsprechendes Bedienelement betätigen, das die Umschaltung von der Radarbetriebsart 17 in die Datenaustauschbetriebsart im oben beschriebenen Sinne initiiert. Wird ein als gültig erkannter Code von dem stationären Sender/Empfänger 16 empfangen, werden eine Schranke, ein Tor oder dergleichen in der gewünschten Weise angesteuert.

Der Datenaustausch kann außerdem zur Gebührenabbuchung und/oder Zugangsberechtigung beispielsweise bei Parkplätzen und Tankstellen eingesetzt werden.

Die im Fahrzeug hinterlegten relevanten Diagnosedaten könnten ebenfalls in der Datenaustauschbetriebsart 19 ausgelesen werden, wenn sich das Fahrzeug zu Inspektions- oder Reparaturzwecken in der Werkstatt befindet.

Als weiterer Anwendungsfall der Datenaustauschbetriebsart 19 kommt die Kommunikation mit am Fahrbahnrand angeordneten Sendern/Empfängern 16 zur Übermittlung von Verkehrsinformationen in Betracht.

In einer weiteren alternativen Anwendung lassen sich in der Datenaustauschbetriebsart 19 drahtlos Daten mit weiteren im Fahrzeug angeordneten Geräten wie beispielsweise einem Fahrerinformationssystem, einem Mobiltelefon oder einem Computer austauschen. So könnte über das Mobiltelefon eine von dem Alarmsystem generierte Warnmeldung an einen gewünschten Mobiltelefonanschluß automatisch weitergeleitet werden.

Durch die Verwendung verschiedener Datenstrukturen und Protokollen können in der Datenaustauschbetriebsart 19 mit denselben Kommunikationselementen die oben genannten Applikationen selektiv angesprochen werden.

## Patentansprüche

1. Vorrichtung zur Abstandsermittlung und Datenübertragung, anwenbar in einem Kraftfahrzeug,
mit Sendemitteln (24, 26, 31, 34, 36, 40) zum Erzeugen und Abstrahlen eines Radarsignals, mit Empfangsmitteln (42, 38) zur Aufnahme eines Radarsignals, **dadurch gekennzeichnet, daß** Umschaltmittel (15, 21, 22) vorgesehen sind, die den Betrieb der Sende- und/oder Empfangsmittel (24, 26, 31, 34, 36, 38, 40, 42) entweder in einer Radarbetriebsart (17) zur Abstands- bzw. Geschwindigkeitserfassung zumindest eines weiteren Objekts oder in einer Datenaustauschbetriebsart (19) zum Datenaustausch mit einem Sender/Empfänger (16) bewirken, wobei in Abhängigkeit von einem Datenaustausch in der Datenaustauschbetriebsart (19) eine Freigabe der Fahrberechtigung und/oder der Zugangsberechtigung des Kraftfahrzeugs erfolgt.

2. Vorrichtung nach Anspruch 1, **dadurch gekennzeichnet, daß** die Datenaustauschbetriebsart (19) dann aktiviert ist, wenn das Kraftfahrzeug ausgeschaltet ist und/oder der Benutzer das Kraftfahrzeug verlassen hat.

3. Vorrichtung nach einem der vorhergehenden Ansprüche, **dadurch gekennzeichnet, daß** in Abhängigkeit von einer Betätigung eines Bedienelements in Verbindung mit der Einleitung eines Öffnungs- und/oder Startvorgangs die Datenaustauschbetriebsart (19) aktiviert ist.

4. Vorrichtung nach einem der vorhergehenden Ansprüche, **dadurch gekennzeichnet, daß** die Freigabe der Fahrberechtigung und/oder der Zugangsberechtigung des Kraftfahrzeugs nur dann erfolgt, wenn in der Radarbetriebsart (17) erfaßte Signale auf ein sich näherndes Objekt schließen lassen.

5. Vorrichtung nach einem der vorhergehenden Ansprüche, **dadurch gekennzeichnet, daß** Auswahlmittel (21) zur Codierung einer in der Datenaustauschbetriebsart (19) zur übertragenden Information angesteuert werden.

6. Vorrichtung nach einem der vorhergehenden Ansprüche, **dadurch gekennzeichnet, daß** ein Impulssignal zur Erzeugung des Radarsignals über das Umschaltmittel (21) zur Ansteuerung eines Schaltmittels (31) weitergeleitet wird, über das ein Oszillatorsignal eines Oszillators (34) an eine Sendeantenne (40) weiterleitbar ist.

7. Vorrichtung nach einem der vorhergehenden Ansprüche, **dadurch gekennzeichnet, daß** ein erstes Umschaltmittel (21) in Abhängigkeit von der zu übertragenden Information angesteuert wird.

8. Vorrichtung nach einem der vorhergehenden Ansprüche, **dadurch gekennzeichnet, daß** in der Datenaustauschbetriebsart (19) in Abhängigkeit von einem ausgesendeten und einem empfangenen Signal eine Signallaufzeit ermittelt wird, von der die Freigabe bestimmter Kraftfahrzeugfunktionen abhängt.

9. Vorrichtung nach Anspruch 6, **dadurch gekennzeichnet, daß** ein Mischer ein von einer Empfangsantenne (42) empfangenes Radarsignal mit dem Oszillatorsignal des Oszillators (34) korreliert und in Abhängigkeit von einem Ausgangssignal (44) des Mischers (38) die Freigabe bestimmter Funktionen erfolgt.

10. Vorrichtung nach Anspruch 9, **dadurch gekennzeichnet, daß** in Abhängigkeit von einem zweiten Umschaltmittel (22) das Oszillatorsignal des Oszillators (34) an den Eingang des Mischers (38) gelegt wird.

11. Vorrichtung nach einem der vorhergehenden Ansprüche 6, 9 oder 10, **dadurch gekennzeichnet, daß** das Oszillatorsignal des Oszillators (34) in der Datenaustauschbetriebsart (19) an den Eingang des Mischers (38) gelegt wird.

12. Vorrichtung nach einem der vorhergehenden Ansprüche, **dadurch gekennzeichnet, daß** in Abhängigkeit von dem Datenaustausch in der Datenaustauschbetriebsart (19) ein Antrieb eines Schließsystems angesteuert wird.

## Claims

1. Device for determining distance and transmitting data, which can be used in a motor vehicle and has transmitting means (24, 26, 31, 34, 36, 40) for generating and emitting a radar signal, having receiving means (42, 38) for picking up a radar signal, **characterized in that** switch-over means (15, 21, 22) are provided which cause the transmitting means and/or receiving means (24, 26, 31, 34, 36, 38, 40, 42) to operate either in a radar operating mode (17) for sensing distance or speed of at least one further object or in a data exchange operating mode (19) for exchanging data with a transmitter/receiver (16), the driving authorization and/or the access authorization of the motor vehicle being enabled as a function of an exchange of data in the data exchange operating mode (19).

2. Device according to Claim 1, **characterized in that** the data exchange operating mode (19) is activated if the motor vehicle is switched off and/or the user has left the motor vehicle.

3. Device according to one of the preceding claims, **characterized in that** the data exchange operating mode (19) is activated as a function of an activation of a control element in conjunction with the initialization of an opening process and/or starting process.

4. Device according to one of the preceding claims, **characterized in that** the driving authorization and/or access authorization of the motor vehicle are enabled only if signals sensed in the radar operating mode (17) allow the presence of an approaching object to be determined.

5. Device according to one of the preceding claims, **characterized in that** selection means (21) for encoding an information item which is to be transmitted in the data exchange operating mode (19) are actuated.

6. Device according to one of the preceding claims, **characterized in that** a pulse signal for generating the radar signal is passed on via the switch-over means (21) for the actuation of a switching means (31), via which an oscillator signal of an oscillator (34) can be passed on to a transmitting antenna (40).

7. Device according to one of the preceding claims, **characterized in that** first switch-over means (21) are actuated as a function of the information to be transmitted.

8. Device according to one of the preceding claims, **characterized in that** a signal propagation time on which the enabling of specific motor vehicle functions depends is determined in the data exchange operating mode (19) as a function of a transmitted signal and a received signal.

9. Device according to Claim 6, **characterized in that** a mixer correlates a radar signal received by a receiving antenna (42) with the oscillator signal of the oscillator (34) and specific functions are enabled as a function of an output signal (44) of the mixer (38).

10. Device according to Claim 9, **characterized in that** the oscillator signal of the oscillator (34) is applied to the input of the mixer (38) as a function of a second switch-over means (22).

11. Device according to one of the preceding Claims 6, 9 or 10, **characterized in that** the oscillator signal of the oscillator (34) is applied to the input of the mixer (38) in the data exchange operating mode (19).

12. Device according to one of the preceding claims, **characterized in that** a drive of a lock system is actuated as a function of the data exchange in the data exchange operating mode (19).

## Revendications

1. Dispositif pour déterminer une distance et transmettre les données dans un véhicule automobile comprenant
des moyens d'émission (24, 26, 31, 34, 36, 40) pour générer et émettre un signal radar, des moyens de réception (42, 38) pour recevoir un signal radar,
**caractérisé en ce que**
des moyens de commutation (15, 21, 22) commandent le fonctionnement des moyens d'émission et/ou de réception (24, 26, 31, 34, 36, 38, 40, 42) soit en mode de fonctionnement radar (17) pour détecter une distance ou une vitesse d'au moins un autre objet, soit en mode d'échange de données (19) pour échanger des données avec un émetteur/récepteur (16), et en fonction d'un échange de données en mode d'échange de données (19), on libère l'autorisation de fonctionnement et/ou l'autorisation d'accès au véhicule.

2. Dispositif selon la revendication 1,
**caractérisé en ce que**
le mode d'échange de données (19) est activé lorsque le véhicule est arrêté et/ou l'utilisateur a quitté le véhicule.

3. Dispositif selon l'une des revendications précédentes,
**caractérisé en ce que**
suivant un actionnement d'un élément de manoeuvre en liaison avec la commande d'une opération d'ouverture et/ou de démarrage, il active le mode d'échange de données (19).

4. Dispositif selon l'une des revendications précédentes,
**caractérisé en ce que**
la libération de l'autorisation de fonctionnement et/ou d'accès au véhicule ne se fait que si les signaux saisis en mode de fonctionnement radar (17) permettent de conclure à un objet qui se rapproche.

5. Dispositif selon l'une des revendications précédentes,
**caractérisé par**
des moyens de sélection (21) pour coder une information à transmettre en mode d'échange de données (19).

6. Dispositif selon l'une des revendications précédentes,
**caractérisé en ce qu'**
un signal impulsionnel pour générer le signal radar est transmis par le moyen de commutation (21) pour commander un interrupteur par lequel un signal oscillant d'un oscillateur (34) est transmis à une antenne d'émission (40).

7. Dispositif selon l'une des revendications précédentes,
**caractérisé en ce qu'**
un premier moyen de commutation (21) est commandé en fonction de l'information à transmettre.

8. Dispositif selon l'une des revendications précédentes,
**caractérisé en ce que**
le mode d'échange de données (19) détermine un temps de parcours de signal en fonction d'un signal émis et d'un signal reçu, temps de parcours dont dépend la libération de certaines fonctions du véhicule automobile.

9. Dispositif selon la revendication 6,
**caractérisé en ce qu'**
un mélangeur effectue une corrélation entre un signal radar reçu par une antenne de réception (42) et le signal oscillant de l'oscillateur (34) et en fonction du signal de sortie (44) du mélangeur (38), certaines fonctions sont libérées.

10. Dispositif selon la revendication 9,
**caractérisé en ce qu'**
en fonction d'un second moyen de commutation (22), le signal oscillant de l'oscillateur (34) est appliqué à l'entrée du mélangeur (38).

11. Dispositif selon l'une des revendications précédentes 6, 9 ou 10,
**caractérisé en ce que**
le signal oscillant de l'oscillateur (34) en mode d'échange de données (19) est appliqué à l'entrée du mélangeur (38).

12. Dispositif selon l'une des revendications précédentes,
**caractérisé en ce qu'**
en fonction de l'échange des données dans le mode d'échange de données (19) on commande un entraînement d'un système de fermeture.
